# EUROPÄISCHE PATENTANMELDUNG

(11) **EP 0 685 949 A2**
(43) Veröffentlichungstag der Anmeldung: **06.12.1995**
(21) Anmeldenummer: 95201420.7
(22) Anmeldetag: 31.05.1995
(51) Int. Cl.: H04L 12/43, H04J 3/08

(54) **Paketübermittlungssystem**

(30) Priorität: 03.06.1994 DE 4419344
(71) Anmelder: Philips Patentverwaltung GmbH, 22335 Hamburg (DE); Philips Electronics N.V., 5621 BA Eindhoven (NL)
(72) Erfinder: Reumermann, Hans-Jürgen, Dipl.-Ing., D-22335 Hamburg (DE); van Wageningen, Andries, D-22335 Hamburg (DE)
(74) Vertreter: Volmer, Georg, Dipl.-Ing.

(57) **Zusammenfassung**

Die Erfindung bezieht sich auf ein Paketübermittlungssystem mit wenigstens einer Koppelvorrichtung (18), die einen Zentralspeicher (19) zur Zwischenspeicherung von auf Zubringerleitungen eintreffenden Paketen, eine Zentralspeichersteuerung (20) zur Erzeugung von Adressen für die Speicherung der Pakete im Zentralspeicher (19) und zur Steuerung des Einschreib- und Auslesevorgangs der Pakete und einen von der Zentralspeichersteuerung (20) gesteuerten Demultiplexer (21) zur Weiterleitung der Pakete auf Abnehmerleitungen enthält. Die Zentralspeichersteuerung (20) enthält einen Adressenspeicher (45) zur Lieferung einer Adresse für einen Einschreibvorgang, jeder Abnehmerleitung zugeordnete Wartepuffer (42 bis 44) zur Zwischenspeicherung der von dem Adressenspeicher (45) gelieferten Adressen, eine Decodervorrichtung (66). Die Decodervorrichtung ist zur Selektierung eines Wartepuffers (42 bis 44) für eine zu speichernde Adresse in Abhängigkeit von dem Bestimmungsort des Paketes, zur Selektierung eines Wartepuffers (42 bis 44) für die Lieferung einer für den Auslesevorgang aus dem Zentralspeicher (19) bestimmten Adresse und zur entsprechenden Steuerung des Demultiplexers (21) vorgesehen.

## Beschreibung

Die Erfindung bezieht sich auf ein Paketübermittlungssystem mit Wenigstens einer Koppelvorrichtung, die
- einen Zentralspeicher zur Zwischenspeicherung von auf Zubringerleitungen eintreffenden Paketen,
- eine Zentralspeichersteuerung zur Erzeugung von Adressen für die Speicherung der Pakete im Zentralspeicher und zur Steuerung des Einschreib- und Auslesevorgangs der Pakete und
- einen von der Zentralspeichersteuerung gesteuerten Demultiplexer zur Weiterleitung der Pakete auf Abnehmerleitungen enthält.

Ein solches Paketübermittlungssystem ist aus dem Buch "ATM - Die Technik des Breitband-ISDN" von Gerd Siegmund, R. v. Decker's Verlag, Heidelberg, 1993, Seiten 169 bis 176 bekannt. Die dort beschriebene Koppelvorrichtung arbeitet nach dem asynchronen Transfermodus.

Bei Verwendung eines asynchronen Transfermodus in einem Übermittlungssystem werden Nutzinformationen, z.B. Fernsprech-, Bild- oder Tonsignale, in Paketen fester Länge über Anordnungen zur digitalen Signalverarbeitung gesendet. Als ein Paket fester Länge wird eine Zelle bezeichnet, die eine vorbestimmte Anzahl von Bytes (53 Bytes) aufweist. Jede Zelle besteht aus einem Kopffeld mit einer Länge von 5 Bytes und einem Informationsfeld, in dem die Nutzinformation untergebracht ist, mit einer Länge von 48 Bytes. In einem solchen Kopffeld sind Wegekennungen, Daten zur Fehlererkennung und Daten für Steuerinformationen vorhanden. Unter Wegekennungen sind Bündelkennungen und Verbindungskennungen zu verstehen. Die Verbindungskennung, die auch als VCI (Virtual Channel Identifier) bezeichnet wird, enthält die Angabe über den Bestimmungsort der Zelle in dem System. Zur Übermittlung einer Zelle wird anhand der Verbindungskennung ein virtueller Kanal zur Verfügung gestellt. In der Regel wird ein VCI nach Erreichen einer Vermittlungsstelle jeweils verändert. Ein Bündel mehrerer virtueller Kanäle wird als virtueller Pfad bezeichnet. Ein virtueller Pfad wird durch die Bündelkennung gekennzeichnet. Ein solcher virtueller Pfad wird VPI (Virtual Path Identifier) genannt. Zellen sind aufeinanderfolgend bestimmten Zeitabschnitten zugeordnet. Die Dauer eines solchen Zeitabschnittes hängt von der zugrundegelegten Taktfrequenz der Übermittlungskomponente ab. Falls keine Nutzinformation vorhanden ist, werden in einem solchen Zeitabschnitt Leerzellen übertragen, d.h. Zellen ohne Nutzinformation. Zellen, die eine Nutzinformation beinhalten, werden als Nutzzellen bezeichnet.

Die oben genannte Koppelvorrichtung basiert auf dem Zentralspeicher-Prinzip. Alle eintreffenden Zellen werden in einen Zentralspeicher geschrieben bzw. am Ausgang aus ihm ausgelesen. Hierbei kann auch ein Kopiervorgang von Zellen durchgeführt werden. Die Zentralspeichersteuerung markiert die Zellen im Zentralspeicher und steuert den Einschreib- und Auslesevorgang des Zentralspeichers. Der schaltungsmäßige Aufbau der Koppelvorrichtung wird in dieser Veröffentlichung nicht genauer beschrieben.

Der Erfindung liegt daher die Aufgabe zugrunde, eine Zentralspeichersteuerung für mit einer nach dem Zentralspeicher-Prinzip arbeitenden Koppelvorrichtung in einem Paketübermittlungssystem zu schaffen.

Die Erfindung wird durch ein Paketübermittlungssystem der eingangs genannten Art dadurch gelöst, daß die Zentralspeichersteuerung
- einen Adressenspeicher zur Lieferung einer Adresse für einen Einschreibvorgang,
- jeder Abnehmerleitung zugeordnete Wartepuffer zur Zwischenspeicherung der von dem Adressenspeicher gelieferten Adressen,
- eine Decodervorrichtung enthält, die
   - zur Selektierung eines Wartepuffers für eine zu speichernde Adresse in Abhängigkeit von dem Bestimmungsort des Paketes,
   - zur Selektierung eines Wartepuffers für die Lieferung einer für den Auslesevorgang aus dem Zentralspeicher bestimmten Adresse und
   - zur entsprechenden Steuerung des Demultiplexers vorgesehen ist.

Die Zentralspeichersteuerung des erfindungsgemäßen Paketvermittlungssystems enthält einen Adressenspeicher, mehrere Wartepuffer und eine Decodervorrichtung. Wenn ein Paket in den Zentralspeicher eingeschrieben werden soll, liefert der Adressenspeicher eine Adresse für den Speicherbereich, in dem das Paket abgelegt werden soll. Arbeitet das Paketübermittlungssystem nach dem asynchronen Transfermodus weisen die Speicherbereiche jeweils die gleiche Größe auf. Wenn aufeinanderfolgende Pakete eine unterschiedliche Länge (unterschiedliche Anzahl von Bytes) aufweisen, kann sich die Größe des Speicherbereiches beispielsweise nach dem längsten vorkommenden Paket richten. Es kann auch jeweils die Länge eines Paketes vor dem Einschreiben ermittelt werden und die Größe des Speicherbereiches anhand der Länge des Paketes bestimmt werden.

Die Anzahl der Wartepuffer in der Zentralspeichersteuerung ist abhängig von der Anzahl der Abnehmerleitungen. Sind z.B. 8 Abnehmerleitungen mit dem Zentralspeicher gekoppelt, müssen 8 Wartepuffer vorhanden sein. Eine von dem Adressenspeicher gelieferte Adresse für den Einschreibvorgang wird in dem oder den Wartepuffern zwischengespeichert, die einer das gespeicherte Paket erhaltene Abnehmerleitung zugeordnet sind. Die Decodervorrichtung ermittelt aus der einer Zelle beigefügten Wegeinformation den Bestimmungsort des Paketes und selektiert den oder die Wartepuffer zur Speicherung der Adresse für den Einschreibvorgang.

Des weiteren steuert die Decodervorrichtung auch den Auslesevorgang der Pakete aus dem Zentralspeicher. In einer vorbestimmten Reihenfolge gibt die Decodervorrichtung die Wartepuffer zur Auslesung einer zwischengespeicherten Adresse frei, die dann an den Zentralspeicher angelegt wird. Beispielsweise kann die Decodervorrichtung die Wartepuffer zyklisch unter der Voraussetzung freigeben, daß Adressen im jeweiligen Wartepuffer enthalten sind. Sind keine Adressen in einem Wartepuffer enthalten, wird dieser übersprungen. Wenn eine Adresse für den Auslesevorgang geliefert wird, wird auch gleichzeitig der Demultiplexer so gesteuert, daß die dem freigegebenen Wartepuffer zugeordnete Abnehmerleitung das ausgelesene Paket erhält.

Um eine gleichmäßige Nutzung aller Speicherbereiche des Zentralspeichers zu erreichen, ist der Adressenspeicher
- zum Empfang der für den Auslesevorgang verwendeten Adressen von den Wartepuffern und
- nach der erstmaligen Ausgabe aller Adressen zur Lieferung weiterer Adressen in der von den Wartepuffern abgegebenen Reihenfolge vorgesehen.

Der Adressenspeicher arbeitet nach dem FIFO-Prinzip (First-In, First-Out), d.h. die wieder eingeschriebenen Adressen werden in der Reihenfolge ihres Eintreffens wieder ausgegeben.

Wenn eine Zelle nicht nur an einen Bestimmungsort gegeben werden soll, wird eine Adresse in mehr als einen Wartepuffer eingeschrieben. Diese Adresse kann erst dann wieder dem Adressenspeicher zugeführt werden, wenn die Adresse aus allen Wartepuffern ausgelesen worden ist. Das wird realisiert mittels eines Belegungsspeichers, einer Torschaltung und einer Torsteuerung, die in der Zentralspeichersteuerung enthalten sind. Der Belegungsspeicher ist zur Speicherung jeweils eines Zählwertes für die Anzahl der in den Wartepuffern enthaltenen Kopien einer Zelle vorgesehen. Die Torschaltung dient bei einer Freigabe zur Weiterleitung einer von einem Wartepuffer ausgelesenen Adresse. Die Torsteuerung ist zur Dekrementierung des jeweiligen Zählwertes und zur Freigabe der Torschaltung bei Gleichheit des jeweiligen Zählwertes mit einem vorgegebenen Wert vorgesehen.

Die Decodervorrichtung enthält eine Auswerteschaltung, einen Schreibdecoder und einen Lesedecoder. Die Auswerteschaltung ist zur Auswertung des Bestimmungsortes anhand der dem Paket beigefügten Wegeinformation und der den Bestimmungsort von der Auswerteschaltung empfangene Schreibdecoder während eines Schreibzyklus zur Freigabe eines für die Zwischenspeicherung einer Adresse gekennzeichneten Wartepuffers vorgesehen. Der Lesedecoder gibt die Wartepuffer während eines Lesezyklus in vorbestimmter Reihenfolge zur Auslesung von Adressen frei.

Das Paketübermittlungssystem kann als lokales, nach dem asynchronen Transfermodus (ATM) arbeitendes Netzwerk ausgebildet sein, welches zur Übermittlung von Paketen fester Länge (Zellen) vorgesehen ist. Ein solches lokales Netzwerk enthält mehrere Stationen, die über Netzwerkschnittstellen mit Sende- und Empfangs-Ringanschlüssen gekoppelt sind. Jede Netzwerkschnittstelle enthält eine Koppelvorrichtung, die über Zubringerleitungen mit wenigstens einem Empfangs-Ringanschluß, wenigstens einer Station und wenigstens einer Steueranordnung und über Abnehmerleitungen mit wenigstens einem Sende-Ringanschluß, wenigstens einer Station und wenigstens einer Steueranordnung gekoppelt ist.

Die Koppelvorrichtung einer Netzwerkschnittstelle des lokalen Netzwerkes enthält einen Eingangs-Multiplexer, der zur Zuführung der von den Zubringerleitungen empfangenen Zellen zum Zentralspeicher und zur Abtrennung der jeder Zelle beigefügten Wegeinformation zur Zentralspeichersteuerung vorgesehen ist. Den Eingangs-Multiplexer steuert eine Empfangs-Steuerschaltung, die das Eintreffen von Zellen von wenigstens einem Empfangs-Ringanschluß, wenigstens einer Station und wenigstens einer Steueranordnung ermittelt.

Der Demultiplexer ist zur Kopplung des Ausgangs des Zentralspeichers mit wenigstens einer Steueranordnung, mit wenigstens einem Sende-Ringanschluß und mit wenigstens einer Station vorgesehen. Zur Steuerung des Demultiplexers ist noch der Lesedecoder der Zentralspeichersteuerung vorgesehen.

Bestimmte Bits im Kopffeld einer Zelle sind nach Normungsvorschlägen bzw. -bestimmungen für den VCI (virtual channel identifier) und für den VPI (virtual path identifier) reserviert. Der VCI gibt eine virtuelle Verbindung und der VPI einen virtuellen Pfad an. Im Kopffeld der Zelle enthalten die für den VCI (virtual channel identifier) reservierten Bits die Information über die Kennung für eine Verbindung, die Art der Verbindung und die Zellenart und die für den VPI (virtual path identifier) reservierten Bits die Information über die Adresse. In den mit der Empfang-Steuerschaltung gekoppelten Empfangsschaltungen wird eine Wegeinformation aus dem VCI ermittelt und der Zelle hinzugefügt. Im Eingangs-Multiplexer wird die Wegeinformation abgetrennt und der Zentralspeichersteuerung geliefert.

Die Erfindung bezieht sich auch auf eine Netzwerkschnittstelle für ein lokales, nach dem asynchronen Transfermodus (ATM) arbeitendes Netzwerk, mit der eine Station und Sende- und Empfangs-Ringanschlüsse gekoppelt sind, die eine Koppelvorrichtung enthält. Die Koppelvorrichtung enthält
- einen Zentralspeicher zur Zwischenspeicherung von auf wenigstens einem Empfang-Ringanschluß, von der Station oder der Steueranordnung eintreffenden Zellen,
- eine Zentralspeichersteuerung mit
   - einem Adressenspeicher zur Lieferung von Adressen an den Zentralspeicher für einen Einschreibvorgang,
   - wenigstens einem Sende-Ringanschluß, der Station und der Steueranordnung zugeordnete Wartepuffer zur Zwischenspeicherung der von dem Adressenspeicher gelieferten Adressen, und
   - einer Decodervorrichtung, die
      - zur Selektierung eines Wartepuffers für eine zu speichernde Adresse in Abhängigkeit von dem Bestimmungsort der Zelle,
      - zur Selektierung eines Wartepuffers für die Lieferung einer für den Auslesevorgang bestimmten Adresse und
      - zur entsprechenden Steuerung eines Demultiplexers vorgesehen ist, der zur Weiterleitung der Zellen zu wenigstens einem Sende-Ringanschluß, zur Station und zur Steueranordnung vorgesehen ist.

Ausführungsbeispiele der Erfindung werden nachstehend anhand der Figuren näher erläutert. Es zeigen:
- Fig. 1: ein lokales Netzwerk,
- Fig. 2: eine in dem lokalen Netzwerk nach Fig. 1 verwendbare Netzwerkschnittstelle,
- Fig. 3: eine in der Netzwerkschnittstelle eingesetzte, Zentralspeichersteuerung,
- Fig. 4: ein Zeitdiagramm zur Erläuterung der Funktionsweise der Zentralspeichersteuerung nach Fig. 3 und
- Fig. 5: eine in der Netzwerkschnittstelle eingesetzte Zugangssteuerung.

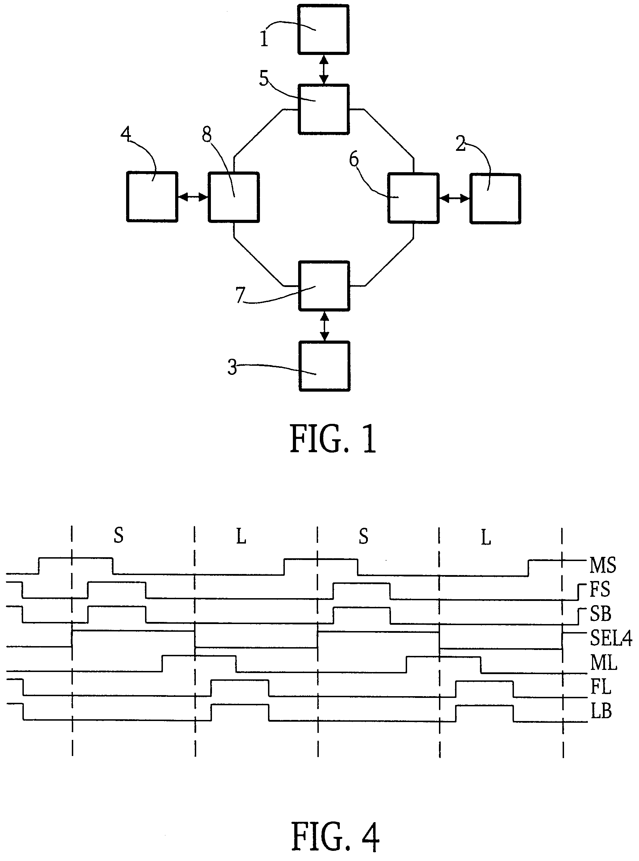

In Fig. 1 ist ein Ausführungsbeispiel eines als lokales Netzwerk ausgebildeten Paketübermittlungssystems mit vier Stationen 1 bis 4 dargestellt, die jeweils über zugeordnete Netzwerkschnittstellen 5 bis 8 mit Ringanschlüssen gekoppelt sind. Eine Station 1 bis 4 kann beispielsweise ein Bildfernsprecher, ein Personal-Computer oder eine Workstation bzw. ein Fernsprecher sein. Die Nachrichten bzw. Informationen, die von den Stationen 1 bis 4 bzw. den Netzwerkschnittstellen 5 bis 8 stammen, werden nach dem asynchronen Transfermodus mittels Zellen übertragen. Eine Zelle enthält ein Kopffeld mit 5 Byte und ein Informationsfeld mit 48 Byte. Die im Kopffeld der Zelle enthaltenen Informationen dienen insbesondere zur Adressierung und zur Durchführung von Vermittlungsfunktionen.

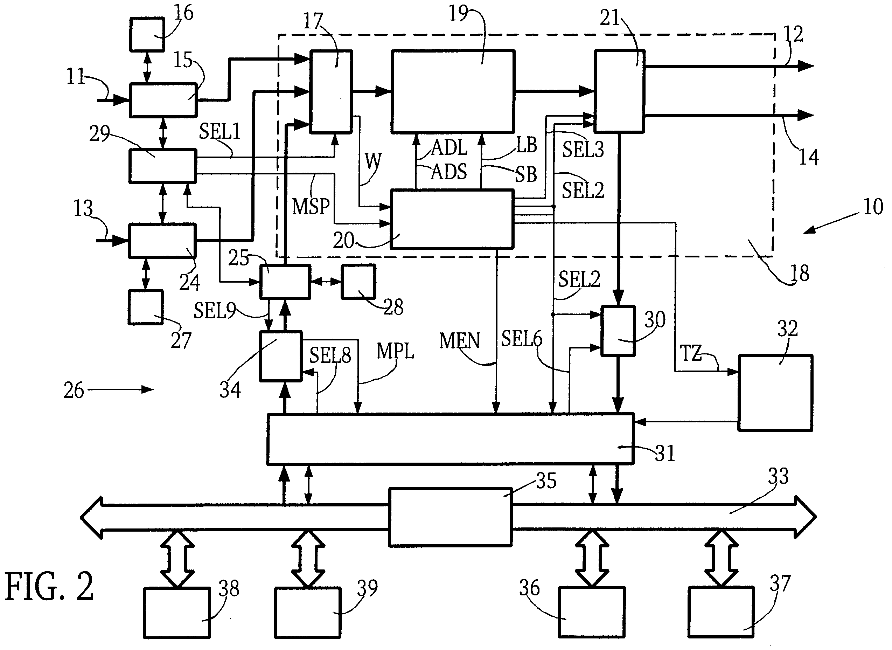

Eine Netzwerkschnittstelle 10, die über einen Empfangs-Ringanschluß 11 und Sende-Ringanschluß 12 mit weiteren Netzwerkschnittstellen und über interne Verbindungen 13 und 14 mit einer Station 1, 2, 3 oder 4 gekoppelt ist, zeigt Fig. 2 in einer detaillierten Darstellung. Vom Empfangs-Ringanschluß 11 erhält eine in der Netzwerkschnittstelle 10 enthaltene Empfangsschaltung 15 einen Zellenstrom. In der Empfangsschaltung 15 wird in einem nicht näher dargestellten Pufferspeicher zumindestens eine Anpassung des Zellenstroms an ein internes Taktsignal, eine Zwischenspeicherung einer Zelle, eine Auswertung des Kopffeldes der Zelle, eine Veränderung der Information des Kopffeldes und eine Hinzufügung einer Wegeinformation (tag) zur Zelle vorgenommen. In der Wegeinformation sind zumindest die Bestimmungsorte der Zelle innerhalb der Netzwerkschnittstelle 10 (z.B. Sende-Ringanschluß 12) enthalten.

Die Empfangsschaltung 15 ist mit einer Wegetabelle 16 verbunden, die in Abhängigkeit von Informationen im Kopffeld einer Zelle Daten der Empfangsschaltung 15 liefert. Hierbei werden bestimmte Teile der Daten im Kopffeld als Speicheradresse für die Wegetabelle 16 verwendet, welche der Empfangsschaltung 15 die unter der Speicheradresse gespeicherten Daten liefert. In das Kopffeld der Zelle wird z.B. eine neue Adresse eingefügt und der Zelle die Wegeinformation W von beispielsweise 2 Byte hinzugefügt.

Der Ausgang der Empfangsschaltung 15 ist mit einem Eingangs-Multiplexer 17 gekoppelt, der Bestandteil einer Koppelvorrichtung 18 ist. In der Koppelvorrichtung 18 ist ferner noch ein Zentralspeicher 19, eine Zentralspeichersteuerung 20 und ein Demultiplexer 21 enthalten. Der Eingangs-Multiplexer 17 leitet die Zellen zu einem Zentralspeicher 18 weiter, trennt die Wegeinformation W von der empfangenen Zelle ab und liefert diese der Zentral speichersteuerung 20.

Der Eingangs-Multiplexer 17 erhält noch Zellen von zwei weiteren Empfangsschaltungen 24 und 25. Der Empfangsschaltung 25 werden Zellen von der zugeordneten Station 1, 2, 3 oder 4 über die interne Verbindung 13 zugeführt und der Empfangsschaltung 25 ein Zellenstrom von einer Steueranordnung 26. Die Empfangsschaltungen 24 und 25, die auf die gleiche Weise arbeiten, wie die Empfangsschaltung 15, sind ebenfalls mit Wegetabellen 27 und 28 verbunden.

Die Empfangsschaltungen 15, 24 und 25 melden einer Empfangssteuerschaltung 29 mittels eines Meldesignals MSP die Ankunft einer Zelle. Die Empfangssteuerschaltung 29 sendet ein Selektionssignal SEL1 zum Eingangs-Multiplexer 17, der entsprechend dem Selektionssignal SEL1 einen seiner Eingänge mit dem Eingang des Zentralspeichers 19 verbindet und die Wegeinformation W einer zum Zentralspeicher 19 weitergeleiteten Zelle zur Zentralspeichersteuerung 20 gibt. Ferner übermittelt die Empfangssteuerschaltung 29 noch Freigabesignale zu den Empfangsschaltungen 15, 24 und 25, die das Auslesen einer Zelle aus einer Empfangsschaltung 15, 24 oder 25 bewirken. Die Empfangssteuerschaltung 29 gibt jeweils in zyklischer Reihenfolge eine Empfangsschaltung 15, 24 oder 25 zum Auslesen einer Zelle zum Eingangs-Multiplexer frei. Ähnliche Empfangsschaltungen und Empfangssteuerschaltungen wie die Empfangsschaltungen 15, 24 und 25 und die Empfangssteuerschaltung 29 werden bei derzeitig verfügbaren Paketübermittlungssystemen verwendet.

Die Zentralspeichersteuerung 20 liefert beim Einschreibvorgang dem Zentralspeicher 19 Schreibadressen ADS und gibt den Zentralspeicher 19 zum Einschreiben über ein Schreib-Freigabesignal SB frei. Hierbei muß zuvor die Meldung über das Meldungssignal MSP von der Empfangssteuerschaltung 29 empfangen worden sein, daß eine Zelle zu speichern ist. In der Zentralspeichersteuerung 20 wird in Abhängigkeit von den empfangenen Wegeinformationen der Ausleseprozeß gesteuert. Beim Auslesevorgang liefert die Zentralspeichersteuerung 20 dem Zentralspeicher 19 Leseadressen ADL und gibt den Zentralspeicher 19 zum Auslesen über ein Lese-Freigabesignal LB frei.

Eine aus dem Zentralspeicher 19 ausgelesene Zelle wird dem Demultiplexer 21 zugeführt, der eine Zelle entweder zu dem Sende-Ringanschluß 12, der internen Verbindung 14 oder einem Eingangs-Zwischenpuffer 30 weiterleitet. Falls eine Zelle zum Eingangs-Zwischenpuffer 30, der Bestandteil der Steueranordnung 26 ist, gelangt ist, erhält eine in der Steueranordnung 26 enthaltene Zugangssteuerung 31 eine entsprechende Meldung über ein Meldungssignal MEN. Des weiteren führt die Zentralspeichersteuerung 20 dem Demultiplexer 21 Selektionssignale SEL2 und SEL3 zu, mit denen dieser gesteuert wird.

Die Zugangssteuerung 31 erhält von einer Tabelle 32 Informationen darüber, welche Bytes der im Eingangs-Zwischenpuffer 30 abgelegten Zelle weiter zu einem mit der Zugangssteuerung 31 gekoppelten Bussystem 33 gegeben werden. Es kann zusätzlich auch eine von der Tabelle 32 gelieferte Zusatzinformation Z mit den ausgewählten Bytes und/oder eine Zusatzinformation Z dem Bussystem 33 von dem Eingangs-Zwischenpuffer 30 bzw. der Tabelle 32 zugeführt werden. Welche Daten die Tabelle 32 dem Bussystem 33 liefert, hängt von einem von der Zentralspeichersteuerung 20 gelieferten Tabellenzeiger TZ ab. Der Tabellenzeiger TZ wird in die Wegeinformation W eingefügt, die in den Empfangsschaltungen 15 und 24 den Zellen mitgegeben wird. In der Zentralspeichersteuerung 20 wird ein Tabellenzeiger TZ aus der Wegeinformation W entnommen, zwischengespeichert und der Tabelle 32 als Adresse geliefert.

Die Teile der Zelle, die nicht zum Bussystem 33 gegeben werden, leitet die Zugangssteuerung 31 zu einem zwischen Empfangsschaltung 25 und Zugangssteuerung 31 angeordneten Ausgangs-Zwischenpuffer 34 weiter. Das Bussystem 33 enthält eine Bussteuerung 35, welche den Busverkehr zwischen der Zugangssteuerung 31 und weiteren an das Bussystem 33 angeschlossenen Einheiten, wie z.B. Arithmetisch-Logische-Einheit 36 (ALU), wenigstens einer Schnittstelle 37, wenigstens einem Speicherbaustein 38 und einer Speichersteuereinheit 39 steuert. Die Schnittstelle 37 dient beispielsweise dazu, Informationen einer Workstation oder einem Personal-Computer zu liefern und/oder weiterzuleiten. Die von dem Bussystem 33 der Zugangssteuerung 31 zugeführten Bytes (erste, bearbeitete Teile der Zelle) werden gegebenenfalls mit den von dem Eingangs-Zwischenpuffer 30 gelieferten restlichen Teilen der Zelle in dem Ausgangs-Zwischenpuffer 34 verbunden und zwischengespeichert. Der Ausgangs-Zwischenpuffer 34 meldet der Zugangssteuerung 31, wenn eine Zelle aufgenommen werden kann.

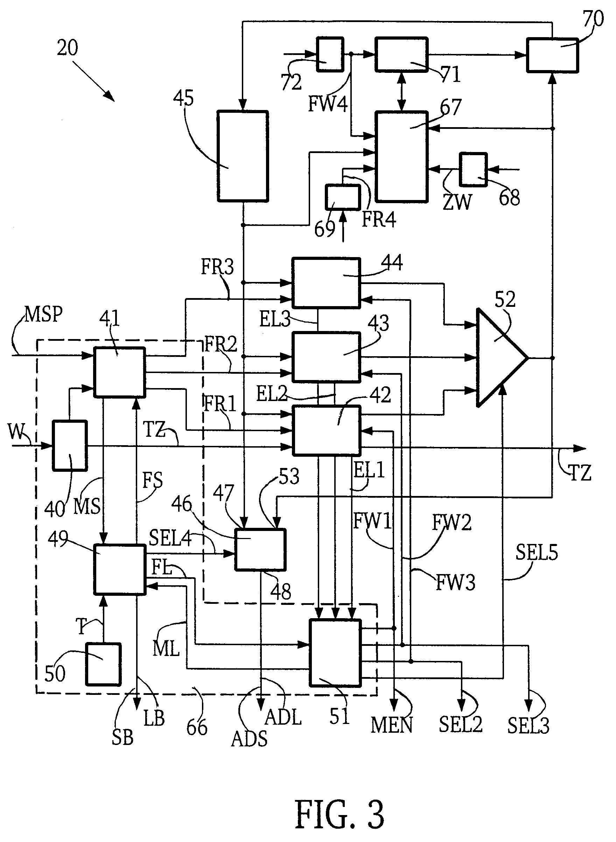

In Fig. 3 ist ein Ausführungsbeispiel einer Zentralspeichersteuerung 20 dargestellt. Eine in der Zentralspeichersteuerung 20 enthaltene Auswerteschaltung 40 entnimmt aus der vom Eingangs-Multiplexer 17 gelieferten Wegeinformation W den oder die Bestimmungsorte einer im Zentralspeicher 19 zu speichernden Zelle und leitet diese Information über den Bestimmungsort an einen Schreibdecoder 41 und gegebenenfalls einen in der Wegeinformation enthaltenen Tabellenzeiger TZ an einen Wartepuffer 42 zur Zwischenspeicherung weiter. Wenn der Schreibdecoder 41 eine Meldung über das Meldungssignal MSP von der Empfangssteuerschaltung 29, daß eine Zelle gespeichert werden soll, und weitere später zu erläuternde Signale erhalten hat, gibt dieser über ein Freigabesignal FR1, FR2 oder FR3 einen oder mehrere von drei Wartepuffern 42, 43 oder 44 frei. Welcher Wartepuffer 42, 43 bzw. 44 die Freigabe erhält, hängt vom den Bestimmungsorten der Zelle ab. Soll die Zelle zum Sende-Ringanschluß 12 gegeben werden, wird der Wartepuffer 44 zum Einschreiben einer von einem Adressenspeicher 45 gelieferten Adresse freigegeben. Ist der Bestimmungsort der Zelle die interne Verbindung 14, wird der Wartepuffer 43 zum Einschreiben einer Adresse vom Adressenspeicher 45 freigegeben. Eine Freigabe des Wartepuffers 42 erfolgt, wenn die Zelle dem Eingangs-Zwischenpuffer 30 zugeführt werden soll. Die Freigabe kann entweder für einen oder mehrere Wartepuffer 42, 43 oder 44 erfolgen (Einzel- oder Mehrfachübertragung einer Zelle). Mit der Freigabe für das Einschreiben einer Adresse in den Wartepuffer 42 kann auch erst der von der Auswerteschaltung 40 gelieferte Tabellenzeiger TZ eingeschrieben werden.

Die von dem Adressenspeicher 45 gelieferte Adresse wird auch in einem Belegungsspeicher 67 zusammen mit einem Zählwert gespeichert. Ein unter der von dem Adressenspeicher 45 gelieferten Adresse gespeicherter Zählwert wird von einem Zählwert-Decoder 68 gebildet. Hierzu werden dem Zählwert-Decoder 48 die Freigabesignale FR1, FR2 und FR3 zugeführt, der daraus einen Zählwert gemäß folgender Tabelle bildet:

| FR3 | FR2 | FR1 | Zählwert | |
|---|---|---|---|---|
| | | | dezimal | binär |
| 0 | 0 | 1 | 1 | 01 |
| 0 | 1 | 0 | 1 | 01 |
| 0 | 1 | 1 | 2 | 10 |
| 1 | 0 | 0 | 1 | 1 |
| 1 | 0 | 1 | 2 | 10 |
| 1 | 1 | 0 | 2 | 10 |
| 1 | 1 | 1 | 3 | 11 |

Die Freigabesignale FR1 bis FR3 weisen den Wert "1" auf, wenn sie einen Wartepuffer 42 bis 44 freigeben. Beispielsweise wird, wenn das Freigabesignal FR3 den Wartepuffer 44 und das Freigabesignal FR1 den Wartepuffer 42 freigibt, der Zählwert dezimal "2" oder binär "10" in dem Zählwert-Decoder 68 gebildet. Damit eine Adresse und ein Zählwert in den Belegungsspeicher 67 eingeschrieben werden kann, muß dieser vorher über ein Freigabesignal FR4 freigegeben werden. Dieses Freigabesignal FR4 wird über ein ODER-Gatter 69 aus den Freigabesignalen FR1 bis FR3 erzeugt.

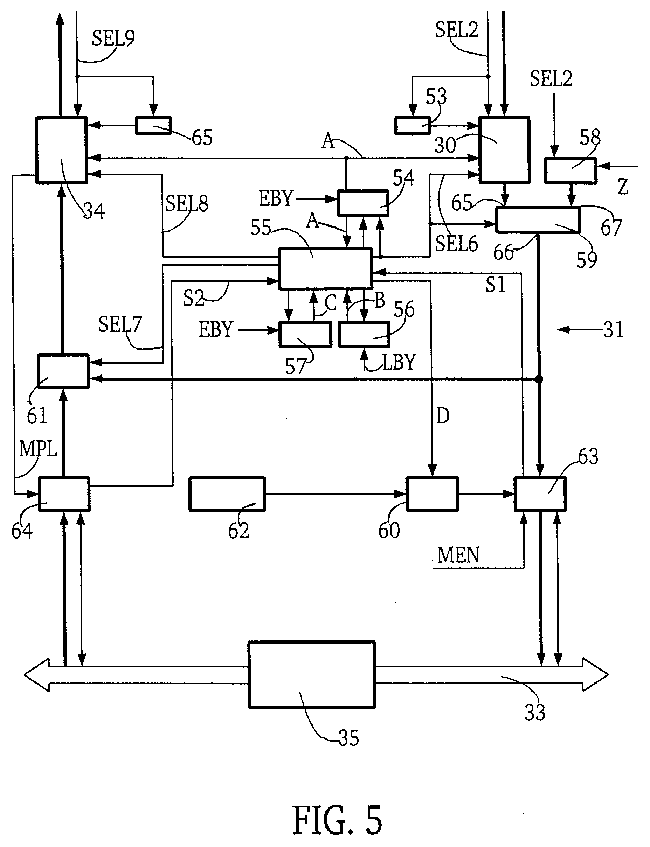

Die in einen Wartepuffer 42, 43 oder 44 eingeschriebene Adresse wird auch einem ersten Eingang 47 eines Multiplexers 46 zugeführt. Wenn der erste Eingang 47 des Multiplexers 46 mit seinem Ausgang 48 verbunden ist, liefert die Zentralspeichersteuerung 20 dem Zentralspeicher 19 eine Schreibadresse ADS. Der Multiplexer 46 wird mittels eines Selektionssignals SEL4 von einem Synchronisierer 49 gesteuert, der ein unabhängiges Taktsignal T von einem Taktgenerator 50 erhält. Der Synchronisierer 49 erzeugt einen Schreibzyklus S und einen Lesezyklus L (vgl. Fig. 4). Während des Schreibzyklus S ist der Ausgang 48 des Multiplexers 46 über seinen ersten Eingang 47 mit dem Ausgang des Adressenspeichers 45 verbunden.

Der Schreibdecoder 41 meldet mittels eines Meldesignals MS (vgl. Fig. 4) dem Synchronisierer 49, wenn eine Zelle in einen Wartepuffer 42, 43 oder 44 einzuschreiben ist. Der Synchronisierer 49 gibt dann während des Schreibzyklus über ein Freigabesignal FS dem Schreibdecoder 41 die Nachricht, daß er die Wartepuffer 42 bis 44 zum Einschreiben freigeben kann. Ferner wird von dem Synchronisierer 49 ein Schreib-Freigabesignal SB an den Zentralspeicher 19 übermittelt.

Die Zentralspeichersteuerung 20 enthält des weiteren einen Lesedecoder 51, der den Ausleseprozeß aus den Wartepuffern 42, 43 und 44 steuert. Im Regelfall gibt der Lesedecoder jeweils abwechselnd die Wartepuffer 42 bis 44 zum Auslesen einer gespeicherten Adresse über drei Freigabesignale FW1, FW2 und FW3 frei. Ist jedoch in einem Wartepuffer 42 bis 44 keine Adresse enthalten, erhält dieser leere Wartepuffer 42, 43 oder 44 keine Freigabe. Von jedem Wartepuffer 42 bis 44 werden daher dem Lesedecoder 51 Meldungen über Meldesignale EL1, EL2 und EL3 zugeführt, wenn keine Adresse gespeichert ist.

Der Lesedecoder 51 meldet mittels eines Meldesignals ML (vgl. Fig. 4) dem Synchronisierer 49, wenn ein Wartepuffer 42, 43 oder 44 freigegeben werden soll. Liegt ein Lesezyklus L vor, so übermittelt der Synchronisierer 49 dem Lesedecoder 51 über ein Freigabesignal FL, daß dieser einen Wartepuffer 42 bis 44 zum Auslesen einer Adresse freigeben kann. Nach der Freigabe über die Freigabesignale FW1, FW2 oder FW3 wird die Adresse aus einem Wartepuffer 42, 43 oder 44 über einen Multiplexer 52 einerseits zu einer Torschaltung 70 und andererseits zum zweiten Eingang 53 des Multiplexers 46 gegeben. Der Multiplexer 52 erhält noch ein Selektionssignal SEL5 von dem Lesedecoder 51. Erhält der Wartepuffer 42 die Freigabe vom Lesedecoder 51, wird auch ein gespeicherter Tabellenzeiger TZ an die Tabelle 32 angelegt.

Die Torschaltung 70 wird von einer mit dem Belegungsspeicher 67 gekoppelten Torsteuerung 71 gesteuert. Wenn eine Adresse von dem Multiplexer 52 geliefert wird, wird diese dem Belegungsspeicher 67 zugeführt. Der Belegungsspeicher 67 wird über ein Freigabesignal FW4 zur Auslesung des unter der Adresse gespeicherten Zählwertes an die Torsteuerung 71 freigegeben. Die Torsteuerung 71, die aus Logikbausteinen aufgebaut ist, läßt sich durch folgenden Ablauf erläutern:
1. Wenn Freigabe über Freigabesignal FW4 erfolgt, Dekrementierung des Zählwertes;
2. Veranlassung der Speicherung des neuen Zählerwertes im Belegungsspeicher 67;
3. Ist neuer Zählerwert gleich Null?
4. Ja: Öffnung der Torschaltung;
5. Nein: Weitere Sperrung der Torschaltung.

In der Torsteuerung 71 wird nach der Freigabe über das Freigabesignal FW4 der vom Belegungsspeicher 67 empfangene Zählwert dekrementiert. Der dekrementierte Zählwert wird daraufhin zurück in den Belegungsspeicher 67 geschrieben. Falls der Zählwert gleich Null ist, wird die Torschaltung 70 geöffnet, so daß die von dem Multiplexer 52 gelieferte Adresse zum Adressenspeicher 45 gelangen kann und dort wieder eingeschrieben wird. Falls der Zählwert nicht Null ist, bleibt die Torschaltung 70 geschlossen. Der Zählerwert, der von dem Zählwert-Decoder 68 zugeführt wird, gibt die Anzahl der Kopien einer Zelle an. Wenn der Zählwert gleich 3 ist, soll eine Zelle zur Sende-Ringanschluß 12, zur internen Verbindung 14 und zur Steueranordnung 26 gegeben werden. Das Freigabesignal FW4 wird von einem ODER-Gatter 72 gebildet, welches die Freigabesignale FW1, FW2 und FW3 empfängt.

Die Freigabesignale FW1, FW2 und FW3 bilden auch die Selektionssignale SEL2 und SEL3 und das Meldungssignal MEN für die Zugangssteuerung 31, daß eine Zelle in den Eingangs-Zwischenpuffer 30 eingelesen werden soll. Der Adressenspeicher 45 arbeitet nach dem FIFO-Prinzip (FIFO = First-In, First-Out). Die wieder eingeschriebenen Adressen werden, nachdem alle Adressen einmal ausgelesen worden sind, von dem Adressenspeicher 45 in der Reihenfolge ihres Eintreffens wieder ausgelesen.

Während des Lesezyklus L wird der Selektionsbefehl SEL4 so geschaltet (vgl. Fig. 4), daß der zweite Eingang 53 des Multiplexers 46 mit seinem Ausgang 48 verbunden ist. Damit wird die von einem Wartepuffer 42, 43 oder 44 über die Multiplexer 52 und 46 geleitete Adresse als Leseadresse an den Zentralspeicher 19 gegeben. Der Synchronisierer 49 erlaubt während des Lesezyklus L das Auslesen einer Zelle aus dem Zentralspeicher 19. Die Auslesemöglichkeit wird über ein Lesesignal LB an den Zentralspeicher 19 gemeldet.

Es sei noch erwähnt, daß die Auswerteschaltung 40, der Schreibdecoder 41, der Synchronisierer 49, der Taktgenerator 50 und der Lesedecoder 51 eine Decodervorrichtung 66 bilden.

In Fig. 5 ist ein Ausführungsbeispiel für die Zugangssteuerung 31 dargestellt, die Zellen über den Eingangs-Zwischenpuffer 30 von der Koppelvorrichtung 18 erhält und Zellen über den Ausgangs-Zwischenpuffer 34 der Koppelvorrichtung 18 zuführt. Die Zugangssteuerung 31, die Teil der Steueranordnung 26 ist, leitet Zellen, Bytes einer Zelle und/oder von der Tabelle 32 zugeführte Zusatzinformationen Z zu dem Bussystem 33, das ebenso wie die Bussteuerung 35, die Schnittstelle 37, die Arithmetisch-Logische-Einheit 36, der Speicherbaustein 38 und die Speichersteuereinheit 39 Bestandteil eines Prozessorsystems sind. Ferner werden Zellen von der Zugangssteuerung 31 zum Ausgangs-Zwischenpuffer 34 geliefert.

Der Einlesevorgang in den Eingangs-Zwischenpuffer 30 wird mittels eines Zählers 53 gesteuert, der von dem Selektionssignal SEL2 gestartet wird und der Einschreibadressen für den Eingangs-Zwischenpuffer 30 erzeugt. Der Eingangs-Zwischenpuffer 30 wird ebenfalls über das Selektionssignal SEL2 zum Einschreiben einer Zelle freigegeben. Der Ausleseprozeß der Bytes einer gespeicherten Zelle aus dem Eingangs-Zwischenpuffer 30 wird mit einem Zähler 54 durchgeführt. Der Zähler 54 ist ebenso wie eine Vergleichsschaltung 55, zwei Register 56, 57 und 58, drei Multiplexer 59, 60 und 61, eine Datenbank 62 und zwei Direkt-Zugriffs-Steuerungen 63 und 64 (Direct Memory Access Controller) Bestandteil der Zugangssteuerung 31.

Mit der Übertragung einer Zelle über den Demultiplexer 21 zum Eingangs-Zwischenpuffer 30 wird der Tabellenzeiger TZ an die Tabelle 28 angelegt. Die Tabelle 28 liefert der Zugangssteuerung 31 unter der durch den Tabellenzeiger TZ gekennzeichneten Adresse eine Zusatzinformation Z und/oder die Adresse des ersten und letzten zu übertragenen Bytes (EBY, LBY) der in dem Eingangs-Zwischenpuffer 30 zu speichernden Zelle. Die von der Tabelle 32 gelieferte Zusatzinformation Z wird mittels des Selektionssignals SEL2 in dem Register 58 abgelegt.

Die Direkt-Zugriffs-Steuerung 63 erhält von der Zentralspeichersteuerung 20 eine Meldung über das Meldungssignal MEN, wenn eine Zelle vom Zentralspeicher 19 über den Schalter 22 in den Eingangs-Zwischenpuffer 30 geschrieben wird. Wie das bei bekannten Direkt-Zugriffs-Steuerungen üblich ist, fragt die Direkt-Zugriffs-Steuerung 63 bei der Bussteuerung 35 über das Bussystems 33 an, ob eine Übertragung von Bytes möglich ist. Ist ein solcher Transfer beispielsweise zur Schnittstelle 37 freigegeben, teilt dies die Direkt-Zugriffs-Steuerung 63 der Vergleichsschaltung 55 über ein Startsignal S1 mit. Die Vergleichsschaltung 55 veranlaßt nach der Freigabe über das Startsignal S1, daß die Adresse EBY des ersten in dem Eingangs-Zwischenpuffer 30 gespeicherten Bytes in den Zähler 54 und das Register 57 und die Adresse LBY des letzten zu übertragenen Bytes in das Register 56 eingeschrieben werden.

Die Vergleichsschaltung 55 vergleicht nach der Freigabe von der Direkt-Zugriffs-Steuerung 63 den Inhalt A des Zählers 54 mit dem Inhalt B des Registers 56. Ist der Inhalt B des Registers 56 größer als der Inhalt A des Zählers 54 wird über ein von der Vergleichsschaltung 55 erzeugtes Selektionssignal SEL6 der Zähler 54 zum Aufwärtszählen, der Eingangs-Zwischenpuffer 30 für das Auslesen von Bytes freigegeben und der Multiplexer 59 so geschaltet, daß Bytes des Eingangs-Zwischenpuffers über den Eingang 65 des Multiplexers 59 zu seinem Ausgang 66 gelangen können. Der Zähler 54 liefert an den Eingangs-Zwischenpuffer 30 Adressen für den Ausleseprozeß.

Stellt die Vergleichsschaltung 55 fest, daß der Inhalt A des Zählers 54 gleich dem Inhalt B des Registers 56 ist, wird der Zähler 54 über das Selektionssignal SEL6 und der Eingangs-Zwischenpuffer 30 zum Auslesen gesperrt. Ferner wird mittels des Selektionssignals SEL6 der zweite Eingang 67 des Multiplexers 59 mit seinem Ausgang 66 verbunden. Falls eine Zusatzinformation Z im Register 58 gespeichert ist, wird diese zur Direkt-Zugriffs-Steuerung 63 übertragen.

Der Direkt-Zugriffs-Steuerung 63 wird noch in einem bestimmten vorgegebenen Format von der Datenbank 62 mitgeteilt, wieviele Bytes jeweils von dem Eingangs-Zwischenpuffer 30 zum Bussystem 33 übertragen werden. Hierzu berechnet die Vergleichsschaltung 55 direkt nach dem Einschreiben die Differenz D zwischen den Adressen EBY und LBY des ersten und letzten Bytes. Diese Differenz D dient dazu den Multiplexer 60 so zu schalten, daß die Information in dem bestimmten vorgegebenen Format von der Datenbank 62 zur Direkt-Zugriffs-Steuerung 63 gelangt. Nach Empfang dieser Information teilt die Direkt-Zugriffs-Steuerung 63 dem Bussystem 33 bzw. der Bussteuerung 35 mit, wieviel Bytes zu übertragen sind. Wenn die Differenz gleich 0 ist, wird der Direkt-Zugriffs-Steuerung 63 von der Datenbank 62 die Information zugeführt, daß Zusatzinformationen vom Multiplexer 59 geliefert werden.

Das Auslesen von Bytes einer Zelle oder einer Gesamtzelle von einer mit dem Bussystem 33 gekoppelten Einheit wird mittels der weiteren Direkt-Zugriffs-Steuerung 64 vorgenommen. Die Bussteuerung 35 meldet über das Bussystem 33 der Direkt-Zugriffs-Steuerung 64, das Bytes von einer mit dem Bussystem gekoppelten Einheit zum Ausgangs-Zwischenpuffer 34 übertragen werden sollen. Die Direkt-Zugriffs-Steuerung 64 kann nur dann Bytes zum Ausgangs-Zwischenpuffer 34 senden, wenn dieser zuvor der Direkt-Zugriffs-Steuerung über ein Meldungssignal MPL gemeldet hat, daß keine Zelle gespeichert ist. Ist die Direkt-Zugriffs-Steuerung 64 zur Übertragung bereit, wird der Vergleichsschaltung 55 dies über ein Startsignal S2 gemeldet.

Nach der Freigabe der Vergleichsschaltung 55 über das Startsignal S2 wird der Zähler 54 auf Null gesetzt und zum Aufwärtszählen freigegeben. Der Zähler 54 erzeugt alle Adressen für den Einleseprozeß in den Ausgangs-Zwischenpuffer 34. Die Vergleichsschaltung 55 vergleicht den Inhalt A des Zählers 54 mit dem Inhalt B des Registers 56, der die Adresse des letzten zum Bussystem 33 zu übertragenden Bytes gespeichert hat, und dem Inhalt C des Registers 57, der die Adresse des ersten zum Bussystem zu übertragenden Bytes gespeichert hat.

Wenn in einem ersten Fall A = B = C = 0 oder A < C, A < B, B < 52 oder A > C, A > B, A ≦ 52 ist, wird über das Selektionssignal SEL6 das Auslesen aus dem Eingangs-Zwischenpuffer 30 freigegeben und der Multiplexer 59 so geschaltet, daß sein erster Eingang 65 mit seinem Ausgang 66 verbunden ist. Die Adressen des Zählers 54 werden hierbei ebenfalls verwendet. Die Vergleichsschaltung 55 erzeugt noch zwei weitere Selektionssignale SEL7 und SEL8 zur Steuerung des Ausgangs-Zwischenpuffers 34 und des Multiplexers 61. Das Selektionssignal SEL8 bewirkt in dem oben genannten Fall, daß der Ausgangs-Zwischenpuffer 34 zum Einlesen freigegeben ist. Im ersten Fall bewirkt das Selektionssignal SEL7, daß über den Multiplexer 61 Bytes vom Multiplexer 59 zum Ausgangs-Zwischenpuffer 34 gelangen. Es sei noch erwähnt, daß sich die Zahl 52 daraus ergibt, daß der Zähler 54 bei Null zu zählen beginnt und 53 Bytes in einer Zelle enthalten sind.

Im zweiten Fall, wenn A ≧ C, A ≦ B, B < 52 oder C = B = 52 oder A = 52 ist, setzt die Vergleichsschaltung 55 das Selektionssignal SEL6 so, daß das Auslesen aus dem Eingangs-Zwischenpuffer 30 gesperrt ist. Das Selektionssignal SEL7 steuert den Multiplexer 61 so, daß der Ausgangs-Zwischenpuffer 34 Zellen von der Direkt-Zugriffs-Steuerung 64 erhält.

Wenn der Zähler 54 den Inhalt 52 aufweist, wird dieser von der Vergleichsschaltung 55 gesperrt. Zumindest wird noch das Selektionssignal SEL8 so verändert, das nach dem Einschreiben des letzten Bytes der Zelle in dem Ausgangs-Zwischenpuffer 34 dieser zum Einschreiben gesperrt ist.

Wenn in dem Ausgangs-Zwischenpuffer 23 eine Zelle zwischengespeichert ist, wird dies der Empfangsschaltung 25 gemeldet. Wenn die Zelle in der Empfangsschaltung 25 ausgewertet werden kann, gibt diese über ein Freigabesignal SEL9 das Auslesen der Zelle aus dem Ausgangs-Zwischenpuffer 34 frei. Weiter wird ein Zähler 65 gestartet, der die Adressen für den Auslesevorgang aus dem Ausgangs-Zwischenpuffer 34 erzeugt.

Zusatzinformationen werden dem Bussystem 33 von der Zugangssteuerung 31 beispielsweise dann geliefert, wenn Zellen für eine bestimmte Verbindung, z.B. für eine Gebührenberechnung, gezählt werden. Zellen, die für Überwachungszwecke eingesetzt werden, weisen z.B. in dem ersten Byte des Informationsfeldes der Zelle Überwachungsinformationen auf. In diesem Fall könnte von der Zugangssteuerung 31 nur das Kopffeld und das erste Byte des Informationsfeldes dem Bussystem zugeführt werden. Wird z.B eine Zelle zur Übertragung einer ATM-Adaptionsschicht vom Type 3/4 verwendet, so überträgt die Zugangssteuerung 31 in diesem Fall 44 Byte des Informationsfeldes zum Bussystem 33.

## Patentansprüche

1. Paketübermittlungssystem mit wenigstens einer Koppelvorrichtung (18), die
- einen Zentralspeicher (19) zur Zwischenspeicherung von auf Zubringerleitungen eintreffenden Paketen,
- eine Zentralspeichersteuerung (20) zur Erzeugung von Adressen für die Speicherung der Pakete im Zentralspeicher (19) und zur Steuerung des Einschreib- und Auslesevorgangs der Pakete und
- einen von der Zentralspeichersteuerung (20) gesteuerten Demultiplexer (21) zur Weiterleitung der Pakete auf Abnehmerleitungen enthält,
dadurch gekennzeichnet,
daß die Zentralspeichersteuerung (20)
- einen Adressenspeicher (45) zur Lieferung einer Adresse für einen Einschreibvorgang,
- jeder Abnehmerleitung zugeordnete Wartepuffer (42 bis 44) zur Zwischenspeicherung der von dem Adressenspeicher (45) gelieferten Adressen,
- eine Decodervorrichtung (66) enthält, die
- zur Selektierung eines Wartepuffers (42 bis 44) für eine zu speichernde Adresse in Abhängigkeit von dem Bestimmungsort des Paketes,
- zur Selektierung eines Wartepuffers (42 bis 44) für die Lieferung einer für den Auslesevorgang aus dem Zentralspeicher (19) bestimmten Adresse und
- zur entsprechenden Steuerung des Demultiplexers (21) vorgesehen ist.

2. Paketübermittlungssystem nach Anspruch 1,
dadurch gekennzeichnet,
daß der Adressenspeicher (45)
- zum Empfang der für den Auslesevorgang verwendeten Adressen von den Wartepuffern (42 bis 44) und
- nach der erstmaligen Ausgabe aller Adressen zur Lieferung weiterer Adressen in der von den Wartepuffern (42 bis 44) abgegebenen Reihenfolge vorgesehen ist.

3. Paketübermittlungssystem nach Anspruch 2,
dadurch gekennzeichnet,
daß die Zentralspeichersteuerung (20)
- einen Belegungsspeicher (67) zur Speicherung jeweils eines Zahlenwertes für die Anzahl der in den Wartepuffern (42 bis 44) enthaltenen Kopien einer Zelle,
- eine Torschaltung (70), die bei einer Freigabe zur Weiterleitung einer von einem Wartepuffer (42 bis 44) ausgelesenen Adresse vorgesehen ist, und
- eine Torsteuerung (71) zur Dekrementierung des jeweiligen Zahlenwertes und zur Freigabe der Torschaltung (70) bei Gleichheit des jeweiligen Zahlenwertes mit einem vorgegebenen Wert.

4. Paketübermittlungssystem nach Anspruch 1, 2 oder 3,
dadurch gekennzeichnet,
daß die Decodervorrichtung (66) eine Auswerteschaltung (40) zur Auswertung des Bestimmungsortes anhand der dem Paket beigefügten Wegeinformation und einen den Bestimmungsort von der Auswerteschaltung (40) empfangenen Schreibdecoder (41) enthält, der während eines Schreibzyklus zur Freigabe eines für die Zwischenspeicherung einer Adresse gekennzeichneten Wartepuffers (42 bis 44) vorgesehen ist.

5. Paketübermittlungssystem nach einem der Ansprüche 1 bis 4,
dadurch gekennzeichnet,
daß die Decodervorrichtung (66) einen Lesedecoder (51) enthält, der zur Freigabe der Wartepuffer (42 bis 44) während eines Lesezyklus in vorbestimmter Reihenfolge zur Auslesung von Adressen vorgesehen ist.

6. Paketübermittlungssystem nach einem der Ansprüche 1 bis 5,
dadurch gekennzeichnet,
daß das Paketübermittlungssystem als lokales, nach dem asynchronen Transfermodus (ATM) arbeitendes Netzwerk ausgebildet ist, welches zur Übermittlung von Paketen fester Länge (Zellen) vorgesehen ist,
daß das lokale Netzwerk mehrere Stationen (1 bis 4) enthält, die über Netzwerkschnittstellen (5 bis 8) mit Sende- und Empfangs-Ringanschlüssen (11, 12) gekoppelt sind,
daß jede Netzwerkschnittstelle (5 bis 8) eine Koppelvorrichtung (18) enthält, die über Zubringerleitungen mit wenigstens einem Empfangs-Ringanschluß (11), wenigstens einer Station (1 bis 4) und wenigstens einer Steueranordnung (26) und über Abnehmerleitungen mit wenigstens einem Sende-Ringanschluß (12), wenigstens einer Station (1 bis 4) und wenigstens einer Steueranordnung (26) gekoppelt ist.

7. Paketübermittlungssystem nach Anspruch 6,
dadurch gekennzeichnet,
daß die Koppelvorrichtung (26) einen Eingangs-Multiplexer (17) enthält, der zur Zuführung der von den Zubringerleitungen empfangenen Zellen zum Zentralspeicher (19) und zur Abtrennung der jeder Zelle beigefügten Wegeinformation zur Zentralspeichersteue rung (20) vorgesehen ist und
daß eine das Eintreffen von Zellen von wenigstens einem Empfangs-Ringanschluß (11), wenigstens einer Station (1 bis 4) und wenigstens einer Steueranordnung (26) ermittelnde Empfangs-Steuerschaltung (29) zur Steuerung des Eingangs-Multiplexers (17) vorgesehen ist.

8. Paketübermittlungssystem nach Anspruch 6 oder 7,
dadurch gekennzeichnet,
daß der Demultiplexer (21) zur Zuführung von dem Zentralspeicher (19) gelieferten Zellen zu wenigstens einem Sende-Ringanschluß (12), zu wenigstens einer Station (1 bis 4) und zu wenigstens einer Steueranordnung (26) vorgesehen ist und
daß der Lesedecoder (51) der Zentralspeichersteuerung (20) zur Steuerung des Demultiplexers (21) vorgesehen ist.

9. Netzwerkschnittstelle (5 bis 8) für ein lokales, nach dem asynchronen Transfermodus (ATM) arbeitendes Netzwerk, mit der eine Station (1 bis 4) und Sende- und Empfangs-Ringanschlüsse (11, 12) gekoppelt sind, die eine Koppelvorrichtung (18) enthält,
dadurch gekennzeichnet,
daß die Koppelvorrichtung (18)
- einen Zentralspeicher (19) zur Zwischenspeicherung von auf wenigstens einem Empfang-Ringanschluß (11), von der Station (1 bis 4) oder der Steueranordnung (26) eintreffenden Zellen,
- eine Zentralspeichersteuerung (20) mit
- einem Adressenspeicher (45) zur Lieferung von Adressen an den Zentralspeicher (19) für einen Einschreibvorgang,
- wenigstens einem Sende-Ringanschluß (12), der Station (1 bis 4) und der Steueranordnung (26) zugeordnete Wartepuffer (42 bis 44) zur Zwischenspeicherung der von dem Adressenspeicher (45 ) gelieferten Adressen, und
- einer Decodervorrichtung (66) enthält, die
- zur Selektierung eines Wartepuffers (42 bis 44) für eine zu speichernde Adresse in Abhängigkeit von dem Bestimmungsort der Zelle,
- zur Selektierung eines Wartepuffers (42 bis 44) für die Lieferung einer für den Auslesevorgang bestimmten Adresse und
- zur entsprechenden Steuerung eines Demultiplexers (21) vorgesehen ist, der zur Weiterleitung der Zellen zu wenigstens einem Sende-Ringanschluß (12), zur Station (1 bis 4) und zur Steueranordnung (26) vorgesehen ist.
